# DEMANDE DE BREVET EUROPEEN

(11) **EP 2 416 194 A1**
(43) Date de publication de la demande: **08.02.2012**
(21) Numéro de dépôt: 11175712.6
(22) Date de dépôt: 28.07.2011
(51) Int. Cl.: G02B 6/38, G02B 6/44, G02B 6/245, G02B 6/36

(54) **Passage d'un ruban de fibres optiques**

(30) Priorité: 06.08.2010 FR 1056484
(71) Demandeur: Carrier Kheops Bac, 72700 Allonnes (FR)
(72) Inventeur: Calac, Jeremy, 72000 LE MANS (FR); Peigne, Guillaume, 72000 LE MANS (FR)
(74) Mandataire: Radault, Gabrielle

(57) **Abrégé**

Un dispositif de passage pour un connecteur optique sous-marin, définissant un trou de passage (11) pour un ruban de fibres optiques entouré d'une gaine en matière plastique, et comportant dans ledit trou de passage :
- au moins une partie dénudée (33) du ruban de fibres optiques et
- de la colle de type époxy (17) revêtant au moins la partie dénudée du ruban et remplissant au moins une partie du trou de passage de façon à solidariser le ruban de fibres optiques au dispositif de passage.

## Description

L'invention concerne la réalisation d'un passage (ou traversée de pression) d'un ruban de fibres optiques pour un connecteur optique sous-marin.

On sait qu'il est très difficile de réaliser l'étanchéité d'un passage d'un câble à ruban de fibres optiques à la partie arrière d'un connecteur optique qui résiste aux hautes pressions en milieu sous-marin, c'est-à-dire à des pressions supérieures à 300 bars.

Le ruban de fibres optiques est revêtu d'une gaine de protection qui n'est pas étanche à ces hautes pressions.

On ne connaît par ailleurs pas de dispositif de passage ou barrière étanche et résistant aux hautes pressions en milieu sous-marin, adapté aux connecteurs à ruban de fibres optiques.

Il existe donc un besoin pour un dispositif de passage étanche et résistant aux hautes pressions d'un câble à ruban de fibres optiques.

Il est proposé un procédé de réalisation d'un dispositif de passage d'un ruban de fibres optiques pour un connecteur optique sous-marin, le procédé comportant les étapes suivantes :
- prévoir un câble comprenant un ruban de fibres optiques entouré d'une gaine en matière plastique,
- prévoir un trou de passage du ruban dans une pièce support et un trou transversal au trou de passage apte à permettre l'écoulement d'une colle sous forme de fluide liquide ou visqueux dans le trou de passage,
- dénuder mécaniquement le ruban (en extrémité ou en son milieu) sur une partie de sa longueur correspondant à celle de son passage dans la pièce support, sur une longueur légèrement inférieure à celle du trou de passage,
- dénuder chimiquement la partie restante non dénudée mécaniquement du ruban au moyen d'un solvant de la matière plastique du ruban,
- passer le ruban dans le trou de passage de la pièce support, en disposant la partie dénudée au niveau du trou de passage,
- injecter une colle de type époxy, à forme liquide voire visqueuse, dans le trou transversal jusqu'à ce que la colle revête au moins la partie dénudée du ruban et remplisse au moins en partie le trou de passage, et
- boucher le trou transversal au niveau de son extrémité.

Cette disposition a pour effet de créer un scellement étanche des fibres optiques dénudées du câble ruban et qui adhère de façon étanche et résistante au corps de silice des fibres et aux parois du trou de passage du câble dans la pièce support, éventuellement aux bords du trou de passage. Un tel scellement des fibres peut résister jusqu'à 1600 bars en milieu marin.

Le dimensionnement du trou de passage du ruban dans la pièce support correspond en section, de préférence à un faible jeu près, c'est-à-dire à environ 1 mm près, à celui du ruban. Ceci permet le remplissage au moins en partie du trou de passage par la colle.

Le passage du ruban dans le trou de passage de la pièce support est réalisé en disposant la partie dénudée, de préférence centrée ou proche du niveau du trou de passage du ruban, par exemple par marquage d'une de ses extrémités. Ceci assure l'adhérence de la colle simultanément aux parois du trou de passage et à la partie dénudée du ruban.

Le maintien en position du ruban dans la position centrée ou proche du niveau du trou de passage, est réalisé de préférence au moyen d'un outillage de maintien du câble relativement à la pièce support, par exemple avec un gabarit de maintien du câble sur la pièce support (de préférence au moyen de scotch HT (haute température) collé sur le câble de part et d'autre de la pièce support). Ceci permet la stabilité du positionnement du ruban relativement à la pièce support.

L'injection de la colle de type époxy dans le trou transversal est réalisé de préférence et par sécurité, jusqu'à ce que la colle déborde de chaque côté du trou de passage de la pièce support.

Avantageusement, on met à polymériser la colle injectée dans la pièce support, de préférence à une température de polymérisation supérieure à la température ambiante et inférieure à la température de détérioration du câble à ruban de fibres optiques (par exemple 1 heure à 80°C). On limite ainsi le fluage de la colle injectée et la polymérisation de la colle est accélérée.

Avantageusement, l'étape consistant à dénuder mécaniquement le ruban sur une partie de sa longueur correspondant à celle de son passage dans la pièce support, est réalisée sur une longueur légèrement inférieure à celle du trou de passage, en retrait d'au moins 1 mm à chaque extrémité du trou de passage.

Il est proposé également un dispositif pour la réalisation d'un dispositif de passage d'un ruban de fibres optiques entouré d'une gaine en matière plastique dans une pièce support d'un connecteur optique sous-marin, le dispositif comportant :
- des moyens pour dénuder mécaniquement au moins un ruban de fibres optiques sur une longueur déterminée correspondant au passage du ruban dans un trou de passage de la pièce support,
- des moyens pour dénuder chimiquement la partie non dénudée mécaniquement du ruban au moyen d'un solvant de la matière plastique du ruban, et
- des moyens pour injecter une colle de type époxy, à forme liquide, voire visqueuse, dans le trou de passage jusqu'à ce que la colle revête au moins la partie dénudée du ruban et remplisse au moins en partie le trou de passage.

Les moyens pour dénuder mécaniquement peuvent par exemple comprendre :
- un plateau support des rubans de fibres optiques disposés parallèles l'un à l'autre sur une partie rainurée du plateau support, de section calibrée correspondant en partie à celle des rubans de fibres optiques,
- des moyens de fixation des rubans de fibres optiques, et
- des moyens de découpe en surface de la gaine des rubans de fibres optiques, destinés à dénuder les rubans sur la longueur déterminée.

Ainsi, les rubans de fibres optiques peuvent être logés prisonniers dans les rainures du plateau support.

Les moyens de découpe peuvent comporter une lame destinée à être déplacée le long des rubans de fibres optiques, de préférence au niveau de la partie rainurée du plateau support, parallèlement à ce dernier et sur une course correspondante à la longueur déterminée, en éloignement des moyens de fixation des rubans. Ainsi, la découpe des rubans est effectuée en traction des rubans relativement aux moyens de fixations, ce qui facilite leur maintien sur le plateau support.

La lame peut être configurée avec une section tranchante, apte à découper la partie de la gaine disposée au-dessus du corps de silice de fibre optique, selon une bande fine de découpe.

Les moyens de fixation peuvent comporter un système de brides ou similaire et destinées à recevoir serrées entre lui et le plateau support les rubans de fibres optiques. Ce système de fixation comporte de préférence un tampon intermédiaire de protection des rubans de fibres optiques.

Ce dispositif peut comporter successivement d'amont en aval de la direction d'avance de la lame sur les rubans de fibres optiques, un ensemble de bridage des rubans de fibres optiques, la lame de dénudage des rubans, montée mobile relativement au plateau support des rubans, et une barrette de maintien des rubans.

Il est également proposé un dispositif de passage pour un connecteur optique sous-marin, définissant un trou de passage pour un ruban de fibres optiques entouré d'une gaine en matière plastique, et comportant dans ledit trou de passage :
- au moins une partie dénudée du ruban de fibres optiques et
- de la colle de type époxy revêtant au moins la partie dénudée du ruban et remplissant au moins une partie du trou de passage de façon à solidariser le ruban de fibres optiques au dispositif de passage.

Il est également proposé le connecteur optique comportant le dispositif de passage précité.

Un mode de réalisation de l'invention est à présent décrit en référence au dessin annexé, sur lequel :
- la figure 1 est un schéma bloc illustrant les diverses étapes du procédé de réalisation d'un dispositif de passage d'un câble à ruban de fibres optiques dans une pièce support d'un connecteur optique sous-marin, selon un mode de réalisation de l'invention,
- la figure 2 est une vue en perspective schématique partielle illustrant le dénudage mécanique des rubans de fibres optiques du câble optique, et
- la figure 3 est un schéma en coupe de la pièce support montrant le trou de passage d'un ruban de fibres optiques du câble optique, et l'injection de la colle sur la partie dénudée du ruban de fibres optiques.

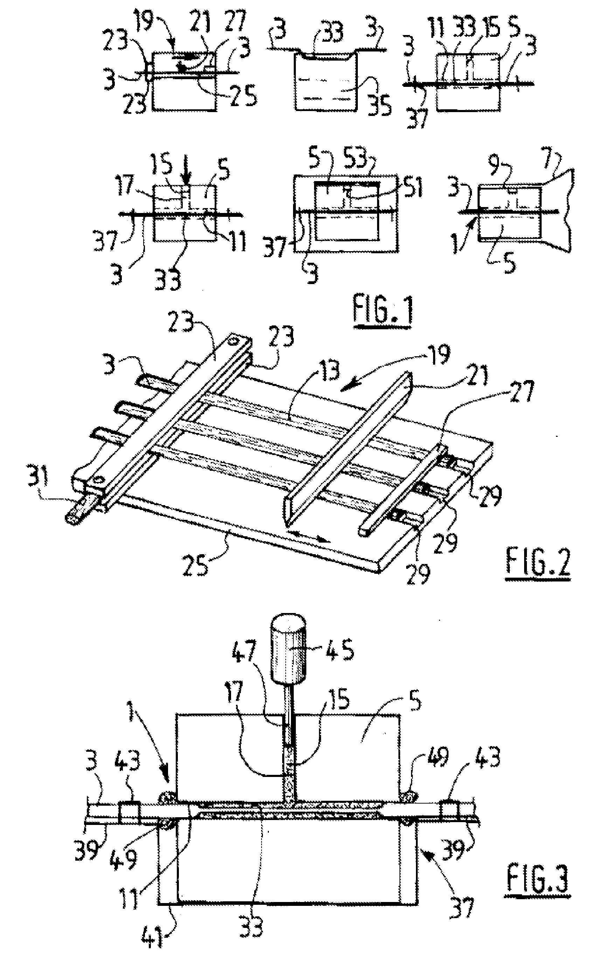

Avec référence à la figure 1, on a représenté un procédé de réalisation d'un dispositif de passage étanche 1 et résistant à la pression d'un câble 3 à ruban de fibres optiques dans une pièce support 5, ce dispositif de passage étant destiné à être monté solidairement à un connecteur optique 7 sous marin et à relier le câble optique 3 à la partie arrière 9 de carcasse de connecteur optique 7.

Les étapes essentielles du procédé ont été schématisées à forme de blocs successifs.

Il s'agit dans un premier temps d'usiner la pièce support 5 du connecteur optique 7 (non représenté) pour qu'elle puisse recevoir le câble optique 3, et donc de ménager dans cette dernière un trou 11 de section oblongue traversant la pièce support 5 et destiné à recevoir le câble 3, et plus précisément le ruban de fibres optiques adjacentes 13, par exemple de type à férule MT, du câble optique 3.

Le dimensionnement en section du trou 11 correspond à faible jeu , par exemple à 1mm près, à la section du ruban de fibres optiques 13.

Un deuxième trou de perçage 15 est formé, étant relié transversalement au premier trou 11, sensiblement en zone médiane de ce dernier (cf. également figure 3) et débouchant à la surface de la pièce support 5. Ce deuxième trou est destiné à permettre le passage de colle 17 sous forme visqueuse dans le premier trou 11, comme cela sera expliqué plus loin. Le diamètre du deuxième trou est d'environ 1mm.

Une première étape du procédé consiste à dénuder le câble 3 et plus précisément le ruban de fibres optiques 13 au moyen d'un dispositif à lame 19 représenté schématiquement et partiellement à la figure 2.

Ce dispositif 19 comporte successivement d'amont en aval de la direction d'avance de la lame 21 un ensemble de deux barrettes opposées 23 de serrage de rubans de fibres optiques 13, une lame 21 de dénudage des rubans 13, montée mobile relativement à un plateau support fixe 25 des rubans 13, et une barrette de maintien 27 des rubans 13, tandis qu'ils sont dénudés par la lame 21.

Un ou plusieurs rubans de fibres optiques 13 est ainsi disposés sur le plateau support 25, la surface de ce dernier étant rainurée pour recevoir par des rainures parallèles 29, de largeur correspondant à celle de chaque ruban 13, chacun de ces rubans. Ces rainures 29 sont parallèles à la direction d'avance (selon flèche) de la lame 21. La profondeur de ces rainures 29 est déterminée pour que les fibres optiques de ruban en contact avec le plateau support 25, émergent des rainures 29 au moins de l'épaisseur de la gaine de protection des fibres plus celle du ruban, soit environ 0,1mm, pour des fibres optiques classiques de 125µm de diamètre pour le corps de silice avec une épaisseur du ruban de 310µm. La profondeur des rainures 29 peut ainsi être d'environ 200 µm, la lame étant déplacée très près de la surface rainurée 29 du plateau support 25 et découpant la partie émergente du ruban des fibres (d'épaisseur d'environ 310 µm) à la surface du plateau 25.

Ainsi disposés, chacun dans une des rainures 29, les rubans 13 sont maintenus en position latéralement sur le plateau support 25. Ces rubans 13 sont en outre maintenus en position, serrés au moyen d'un tampon de protection intermédiaire 31, entre les barrettes de serrage 23, ce qui empêche leur glissement sous la traction de découpe de dénudage de la gaine de protection par la lame 21, tandis que les rubans 13 sont maintenus en position, en aval, par la barrette de maintien 27 disposée contre les rubans 13, à contact à faible emprise (à léger jeu) contre ces derniers.

La lame 21 est configurée avec une section tranchante, par exemple biseautée, apte à découper la partie de la gaine disposée au-dessus du corps de silice de la fibre optique, selon une bande fine de découpe d'environ 100 µm d'épaisseur.

Cette lame 21 est déplacée sur les rubans 13 selon flèche sur une longueur légèrement inférieure à celle du trou de passage 11 de la pièce support 5, correspondant à la longueur de dénudage des fibres optiques de ruban 13 souhaitée.

Cette longueur de la partie dénudée 33 des fibres optiques peut être inférieure de 1 à plusieurs mm à celle du trou de passage 11, de façon en ce qu'en position centrée de la partie dénudée 33 dans le trou de passage 11, la partie dénudée 33 de chacune des fibres, toutes au même niveau transversalement au ruban, soit légèrement en retrait du bord du trou de passage 11, de la moitié de la valeur précitée.

Selon ce procédé de dénudage mécanique par une lame supérieure 2 1, on découpe une première bande de gaine de protection des rubans 13 sans l'enlever, on retourne chacun des rubans 13 traités et la bande découpée vient reposer dans le fond de la rainure 29 pour servir d'assise à la découpe de dénudage de la partie de gaine de ruban opposée à celle déjà découpée. Cette nouvelle découpe ou deuxième bande de découpe est opposée à la précédente (même début, même fin et même profondeur de coupe) et lorsque cette deuxième découpe est terminée, on peut ôter les première et deuxième bandes de protection découpées. Le ruban 13 est alors pratiquement dénudé sauf aux parties latérales des fibres optiques, qu'il est facile d'ôter (découper manuellement).

Il s'agit ensuite d'effectuer l'opération de dénudage chimique de la partie de ruban dénudée mécaniquement 33, représentée au deuxième bloc en haut vers la droite sur la figure 1, ceci pour enlever toutes traces, sous forme poussière, de la matière plastique de protection des fibres qui pourraient subsister sur la partie dénudée 33. La partie dénudée 33 peut par exemple être trempée dans un solvant 35 de la matière plastique, par exemple un produit décapant des peintures, selon une durée déterminée correspondant à cette dissolution chimique des impuretés précitées.

Une fois le dénudage chimique effectué, on peut nettoyer et dégraisser la partie dénudée 33, par exemple avec un solvant à base d'alcool (non représenté). Cette opération accroît la qualité d'adhérence de la colle dans l'opération de collage décrite plus loin.

Il s'agit à présent d'enfiler le câble 3 ou ruban de fibres 13 dans le trou de passage 11, d'indexer le positionnement de la partie dénudée 33 relativement au trou de passage 11 et de maintenir en position cette partie dénudée 33 relativement à la pièce support 5. Ceci est représenté par le troisième bloc, vers la droite juste après le dénudage chimique. Le centrage de la partie 33 dans le trou de passage 11 peut être effectué au moyen d'un témoin marqueur sur le ruban positionné à une distance déterminée de la pièce support sur un côté de cette dernière (non représenté).

Le maintien en position de la partie dénudée 33 relativement au trou de passage 11 de la pièce de support 5 est réalisé au moyen d'un gabarit de maintien 37 (cf. également figure 3) comportant par exemple un plateau support 39 du ruban 13 et une partie évidée 41, laquelle reçoit la pièce support 5 en immobilisation, de telle sorte que le ruban 13 puisse être disposé au contact du plateau 39, étant fixé à ce dernier par exemple par une bande de « scotch HT 43 » (haute température) collé sur le ruban 13 et le plateau 39, de part et d'autre de la pièce support 5, comme on le voit sur la figure 3.

Il s'agit maintenant (cf. le quatrième bloc successif) d'injecter de la colle époxy 17, mono composant ou bi composant (avec durcisseur) dans le trou 15 transversal au trou de passage 11. Cette colle 17 est injectée par exemple par une seringue 45 dont l'aiguille 47 (de longueur inférieure à la profondeur du trou 15) est introduite dans le trou 15 (figure 3). Cette injection de colle est opérée jusqu'à ce que cette dernière remplisse le trou de passage 11 au niveau de la partie dénudée 33, revêtant complètement cette partie dénudée 33.

Par sécurité, on peut attendre que la colle 17 déborde de chaque côté en 49 du trou de passage 11 comme représenté dans le cas présent.

L'étape suivante (cf. le cinquième bloc successif du schéma) consiste à polymériser la colle 17 injectée dans le trou de passage 11, en fermant au préalable le deuxième trou 15 au moyen d'un bouchon 51 de manière à empêcher la migration de la colle 17. Cette opération est effectuée au moyen d'un four 53, par exemple à 80°C pendant une heure, dans lequel est disposé la pièce support 5 avec le gabarit de maintien 37 du ruban 13 (cf. le cinquième bloc successif du schéma).

Lorsque la polymérisation est terminée, on peut déposer le gabarit de maintien 37 de la pièce support 5 et monter cette pièce support 5 ou le dispositif de passage 1 obtenu sur le connecteur optique 7 comme représenté sur le sixième bloc du schéma de la figure 1, en partie arrière 9 de la carcasse du connecteur optique 7.

Un tel connecteur optique 7 comporte un dispositif de passage 1 du câble 3 formant une barrière d'étanchéité de raccordement du câble optique 3 à la partie 9, qui est résistante aux hautes pressions, jusqu'à 1600 bars et donc est adaptée au milieu marin, notamment aux grandes profondeurs.

## Revendications

1. Procédé de réalisation d'un dispositif de passage d'un ruban de fibres optiques (13) pour un connecteur optique (7) sous-marin, le procédé comportant les étapes suivantes :
- prévoir un câble (3) comprenant un ruban de fibres optiques (13) entouré d'une gaine en matière plastique,
- prévoir un trou de passage (11) du ruban dans une pièce support (5), et un trou (15) transversal au trou de passage (11) apte à permettre l'écoulement d'une colle sous forme de fluide liquide ou visqueux (17) dans le trou de passage (11),
- dénuder mécaniquement le ruban (13) sur une partie de sa longueur correspondant à celle de son passage dans la pièce support (5), sur une longueur légèrement inférieure à celle du trou de passage (11),
- dénuder chimiquement la partie restante non dénudée mécaniquement (33) du ruban au moyen d'un solvant (35) de la matière plastique du ruban,
- passer le ruban (13) dans le trou de passage (11) de la pièce support, en disposant la partie dénudée (33) au niveau du trou de passage (11),
- injecter une colle de type époxy (17), à forme liquide voire visqueuse, dans le trou transversal (15) jusqu'à ce que la colle (17) revête au moins la partie dénudée (33) du ruban et remplisse au moins en partie le trou de passage (11), et
- boucher le trou transversal (15) au niveau de son extrémité.

2. Procédé selon la revendication 1, **caractérisé en ce que** l'étape consistant à dénuder mécaniquement le ruban (13) sur une partie de sa longueur correspondant à celle de son passage dans la pièce support (5), est réalisée sur une longueur légèrement inférieure à celle du trou de passage (11), en retrait d'au moins 1 mm à chaque extrémité du trou de passage (11).

3. Dispositif pour la réalisation d'un dispositif de passage d'un ruban de fibres optiques entouré d'une gaine en matière plastique dans une pièce support (5) d'un connecteur optique sous-marin (7), la pièce support (5) comprenant un trou de passage (11) et un trou transversal (15),
le dispositif comportant :
- des moyens (19) pour dénuder mécaniquement au moins un ruban de fibres optiques sur une longueur déterminée, légèrement inférieure à la longueur du trou de passage (11) dans la pièce support (5),
- des moyens pour dénuder chimiquement la partie restante non dénudée mécaniquement du ruban au moyen d'un solvant (35) de la matière plastique du ruban,
- des moyens pour injecter une colle de type époxy (17), à forme liquide, voire visqueuse, dans le trou transversal (15) jusqu'à ce que la colle revête au moins la partie dénudée du ruban et remplisse au moins en partie le trou de passage (11), et
- des moyens pour boucher le trou transversal (15) à son extrémité.

4. Dispositif selon la revendication 3, **caractérisé en ce que** les moyens (19) pour dénuder mécaniquement comprennent :
- un plateau support (25) des rubans de fibres optiques (13) disposés parallèles l'un à l'autre sur une partie rainurée (29) du plateau support (25), de section calibrée correspondant en partie à celle des rubans de fibres optiques (13),
- des moyens (23) de fixation des rubans de fibres optiques (13),
et
- des moyens (21) de découpe en surface de la gaine des rubans de fibres optiques (13), destinés à dénuder les rubans sur la longueur déterminée.

5. Dispositif selon la revendication 4, **caractérisé en ce que** les moyens de découpe comportent une lame (21) destinée à être déplacée le long des rubans de fibres optiques (13), parallèlement au plateau support (25) et sur une course correspondant à la longueur déterminée, en éloignement des moyens (23) de fixation des rubans.

6. Dispositif selon la revendication 4 ou 5, **caractérisé en ce que** les moyens de fixation comportent un bridage (23) destinées à recevoir serrées entre lui et le plateau support les rubans de fibres optiques (13).

7. Dispositif selon la revendication 6, **caractérisé en ce que** le dispositif comporte successivement d'amont en aval de la direction d'avance de la lame (21) sur les rubans de fibres optiques (13), un ensemble de bridage (23) des rubans de fibres optiques (13), la lame (21) de dénudage des rubans, montée mobile relativement au plateau support (25) des rubans, et une barrette (27) de maintien des rubans (13).

8. Dispositif selon la revendication 5, 6 ou 7, **caractérisé en ce que** la lame (21) est configurée avec une section tranchante, apte à découper la partie de la gaine disposée au-dessus du corps de silice de fibre optique, selon une bande fine de découpe.

9. Dispositif de passage (5) pour un connecteur optique (7) sous-marin, comportant un trou de passage (11) dans une pièce support (5) pour un ruban de fibres optiques (13) et comportant un trou transversal (15) pour permettre l'écoulement d'une colle de type époxy, et comportant dans ledit trou de passage (11):
- au moins une partie (33) du ruban de fibres optiques (13), mécaniquement et chimiquement dénudée sur une longueur inférieure à celle du trou de passage (11),
- de la colle de type époxy (17) injectée par le trou transversal (15) revêtant au moins la partie dénudée du ruban et remplissant au moins une partie du trou de passage (11) de façon à solidariser le ruban de fibres optiques au dispositif de passage et
- des moyens pour boucher le trou transversal à son extrémité.

10. Connecteur optique sous-marin (7) comportant un dispositif de passage (5) selon la revendication 9.
